# EUROPÄISCHE PATENTSCHRIFT

(11) **EP 1 356 259 B1**
(45) Veröffentlichungstag und Bekanntmachung des Hinweises auf die Patenterteilung: **16.03.2005**
(21) Anmeldenummer: 01990566.0
(22) Anmeldetag: 14.12.2001
(51) Int. Cl.: G01L 19/06

(54) **DIFFERENZDRUCKSENSOR MIT ÜBERLASTSICHERUNG**
DIFFERENTIAL PRESSURE SENSOR WITH OVERLOAD PROTECTION
CAPTEUR DE PRESSION DIFFERENTIELLE DOTE D'UNE SECURITE CONTRE LES SURCHARGES

(30) Priorität: 02.02.2001 DE 10105230
(43) Veröffentlichungstag der Anmeldung: 29.10.2003
(73) Patentinhaber: Endress + Hauser GmbH + Co. KG., 79689 Maulburg (DE)
(72) Erfinder: BURCZYK, Dietfried, 14513 Teltow (DE); DANNHAUER, Wolfgang, 14513 Teltow (DE); NÜRNBERGER, Ralf, 14473 Potsdam (DE)
(74) Vertreter: Andres, Angelika
(86) Internationale Anmeldenummer: PCT/EP2001/014787
(87) Internationale Veröffentlichungsnummer: WO 2002/063266

(56) Entgegenhaltungen:
- US-A- 4 668 889

## Beschreibung

Die vorliegende Erfindung betrifft einen Differenzdrucksensor zur Bestimmung der Druckdifferenz zwischen zwei Meßpunkten. Genauer bezieht sie sich auf einen Differenzdrucksensor mit einer Überlastsicherung.

Differenzdrucksensoren dienen gewöhnlich dazu, kleine Druckdifferenzen zwischen zwei großen Druckwerten zu bestimmen. Im Sinne einer optimierten Meßgenaulgkelt, sollte die Druckmeßzelle in ihrer Empfindlichkeit der zu erwartenden Druckdifferenz entsprechen. Bei Druckschwankungn, können jedoch größere Druckdifferenzen auftreten, welche eine empfindliche Meßzelle bis zur Zerstörung belasten können. Es gibt daher verschledene Ansätze, die Meßzelle gegen solche Überlastungen abzusichern.

Bei einfachen kapazitiven Sensoren oder piezoresistiven Sensoren ist beispielsweise ein Membranbett vorgesehen, an welches sich die Membran anlegt, wenn der Druck einen bestimmten Grenzwert überschreitet.

Gleichermaßen kann bei Drucksensoren mit Trennkörpern bzw. Ölvorlagen ein Membranbett vorgesehen sein, an welches sich die Trennmembran der Ölvorlage anlegt, wenn ein Grenzwert erreicht wird. Zusätzlich zur erwähnten Ausgstaltung des Membranbetts kann bei Differenzdrucksensoren mit einer Ölvorlage noch eine Überlastmembran vorgesehen sein. Eine Überlastmembran ist erheblich steifer als die Trennmembran. Ihre Auslenkung führt zum Anlegen der Trennnembran zur Erreichung des Berstdruckes.

Differenzdrucksensoren ohne eine zusätzilche Überlastmembran sind insofern nachteilhaft, als jeder weitere Druckanstieg zur Zerstörung des Meßelementes führt. Wenn andererseits bei einem Differenzdrucksensor mit einer Ölvorlage eine Überlastmembran vorgesehen ist, vergrößert diese die hydraulischs Kapazität des Systems, was zu einer erhöhten Trägheit des Systems führt. Schnelle impulsförmige Druckschwankungen innerhalb und außerhalb des Meßbereiches sind damit schwieriger zu detektieren.

US Patent Nr. 4668,889 offenbart einen Differenzdrucksensor, bei dem ein Überlastschutz durch eine Ventilanordnung realisiert ist welche zwei einseitig vorgespannte Kugelventile in getrennten, parallel verlaufenden Stichkanälen umfaßt. Die Kanäle sind durch zwei senkrecht verlaufende Verbindungskanäle miteinander verbunden. Im Überlastfall gibt jeweils eines der Kugelventile eine Fließverbindung zwischen den beiden Stichleitungen durch eine der Verbindungsleitungen frei. Der vorliegenden Erfindung liegt die Aufgabe zugrunde, einen Differenzdrucksensor mit einem verbesserten Überlastschutz bereitzustellen.

Die Aufgabe wird gelöst durch den Differenzdrucksensor nach dem unabhängigen Patentanspruch 1. Weitere Ausgestattungen und Vorteile der Erfindung ergeben sich aus den abhängigen Ansprüchen, der Beschreibung und den Zeichnungen.

Der erfindungsgemäße Differenzdrucksensor zum Messen der Differenz zwischen einem ersten Druck an einem ersten Meßpunkt und einem zweiten Druck an einem zweiten Meßpunkt, umfaßt einen Grundkörper, zwei an dem Grundkörper angeordnete membranartige Verformungskörper, von denen der erste mit dem ersten Druck und der zweite mit dem zweiten Druck beaufschlagbar ist; und ein Wandlerelement zur Erzeugung eines Meßsignals in Abhängigeit der Verformung der membranartigen Verformungskörper, wobei der Differenzdrucksensor weiterhin mindestens eine Überlastsicherung aufweist, die eine Fließverbindung zwischen dem ersten Meßpunkt und dem zweiten Meßpunkt herstellt, wenn der erste Druck oder die Differenz zwischen dem ersten Druck und dem zweiten Druck einen Grenzwert übersteigt, wobei die Ventilanordnung ein Kolbenventil als Steuerglied aufweist, Welches in in einer Bohrung im Grundkörper zwischen zwei Druckfedern axial und elastisch eingespannt ist und in seinem Gleichgewichtszustand die mindestens eine Kurzschlußleitung sperrt.

Die Überlastsicherung ist im Grundkörper angeordnet. Sie umfaßt mindestens eine Kurzschlußleitung, welche die Fließverbindung zwischen dem ersten Meßpunkt und dem zweiten Meßpunkt herstellt; und eine Ventilanordnung, welche mindestens durch den ersten Druck steuerbar ist, wobei die Ventilanordnung die mindestens eine Kurzschlußleitung sperrt, wenn der erste Druck oder die Differenz zwischen dem ersten Druck und dem zweiten Druck unterhalb des Grenzwerts liegt, und diese dann freigibt, wenn der erste Druck oder die Differenz zwischen dem ersten Druck und dem zweiten Druck einen Grenzwert übersteigt.

Wenngleich die Steuerung der Ventilanordnung mit dem an einem Meßpunkt anstehenden Druck für bestimmte Anwendungen ausreicht, bei denen beispielsweise ein Überdruck am zweiten Meßpunkt auszuschließen ist, so erscheint es für die meisten Anwendungen wünschenswert, daß die Ventilanordnung durch den ersten und den zweiten Druck steuerbar ist. Hierzu kann das Kolbenventil in der Bohrung, direkt mit dem ersten und/oder zweiten Druck beaufschlagt werden, oder der erste bzw. zweite Druck wirkt jeweils auf einen Druckkolben, welcher beispielsweise über eine Feder auf das Kolbenventil einwirkt.

In einer bevorzugten Ausführungsform ist die Ventilanordnung in einer Bohrung im Grundkörper des Drucksensors angeordnet, die sich zwischen einem ersten Oberflächenabschnitt und einem zweiten Oberflächenabschnitt des Grundkörpers erstreckt.

Die mindestens eine Kurzschlußleitung kann sich vorzugsweise ebenfalls zwischen dem ersten und dem zweiten Oberflächenabschnitt des Grundkörpers erstrecken. Die Kurzschlußleitung kann zumindest abschnittweise mit der Bohrung im Grundkörper zusammenfallen. Der Begriff "Kurzschlußleitung" umfaßt nicht nur Leitungen im engeren Sinne sondern auch andere geeignete Passagen, die beispielsweise als Aussparungen, Nuten, Rillen usw. in der Wand einer Bohrung im Grundkörper angeordnet sind und eine Passage des Meßmediums in Abhängigkeit der Stellung eines Steuerglieds ermöglichen.

Die Kurzschlußleitung kann außerdem einen ersten und einen zweiten Abschnitt umfassen, die sich jeweils von einem der beiden Oberflächenabschnitte bis zu einer ersten bzw. zweiten Öffnung in der Wand der Bohrung erstrecken. Die Ventilanordnung blockiert im Sperrzustand mindestens die erste, vorzugsweise die erste und die zweite Öffnung. In diesem Fall ist ein Leitungsabschnitt im Kolbenventil integriert. Wenn das Kolbenventil aufgrund eines Überdrucks hinreichend weit ausgelenkt wird, stellt der Leitungsabschnitt eine Fließverbindung zwischen der ersten und der zweiten Öffnung her.

Die Ventilkomponenten sind im Sperrzustand in einer elastischen Gleichgewichtslage angeordnet, aus der sie in Abhängigkeit vom ersten oder zweiten Prozeßdruck oder von der Druckdifferenz ausgelenkt werden.

Die Erfindung wird anhand der nachfolgenden Zeichnungen näher erläutert. Es zeigt:
Fig. 1: einen Längsschnitt durch eine erste Ausführungsform eines erfindungsgemäßen Differenzdrucksensors mit Ringmembranen und elastisch vorgespannten Ventilkomponenten;
Fig. 2: einen Längsschnitt durch eine zweite Ausführungsform eines erfindungsgemäßen Differenzdrucksensors mit mit Ringmembranen ohne elastisch vorgespannte Ventilkomponenten;
Fig. 3: einen Längsschnitt durch eine dritte Ausführungsform eines erfindungsgemäßen Differenzdrucksensors mit vollflächigen Trennmembranen;
Fig. 4: einen Längsschnitt durch eine vierte Ausführungsform eines erfindungsgemäßen Differenzdrucksensors mit vollflächigen Trennmembranen; und
Fig.5: eine Längsschnitt durch eine bevorzugte Ventilanordnung ohne elastische Vorspannung.

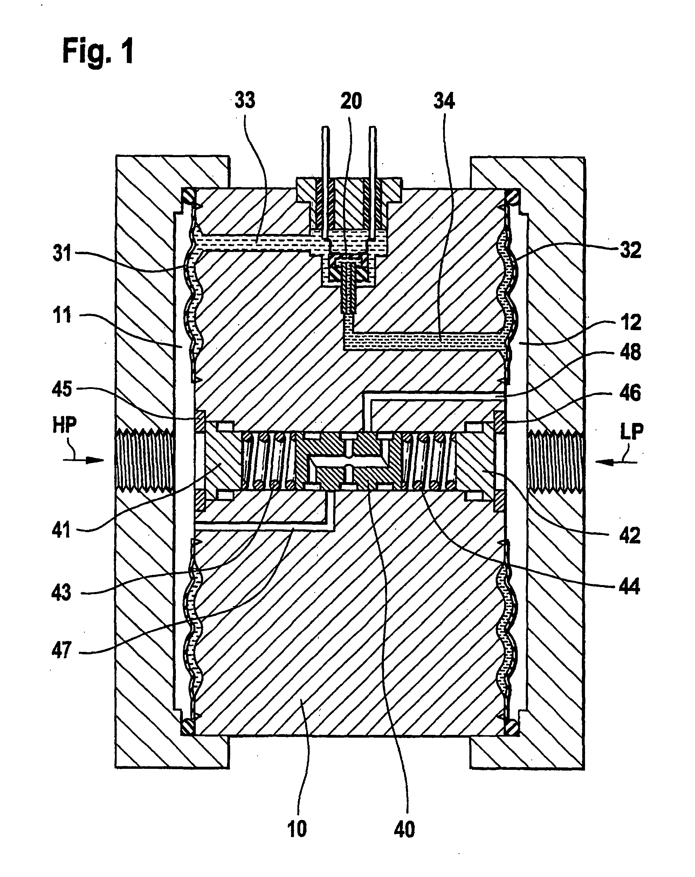

Eine erste Ausführungsform der Erfindung wird nun anhand von Fig. 1 beschrieben. Diese Ausführungsform ist ein Differenzdrucksensor mit einem Trennkörper bzw. einer Ölvorlage. Der Differenzdrucksensor umfaßt einen im wesentlichen zylindrischen Grundkörper 10, auf dessen erster und zweiter Stirnseite jeweils eine erste Trennmembran 31 bzw. eine zweite Trennmembran 32 angeordnet ist. Die Trennmembranen schließen jeweils mit einem entsprechend gestalteten Membranbett in der Oberfläche der jeweiligen Stirnseite ein Volumen ein, welches mit einer Übertragungsflüssigkeit, beispielsweise einem Silikonöl gefüllt ist. Die Oberflächenabschnitte in denen die Trennmembranen angeordnet sind, in diesem Falle die beiden Stirnseiten des Grundkörpers, sind in Druckkammern 11, 12 angeordnet, die durch den Grundkörper und geeignete Abdeckungen etc. gebildet werden. Die beiden Trennmembranen sind in dieser Anordnung jeweils mit einem ersten bzw. einem zweiten Druck beaufschlagbar.

Der Differenzdrucksensor weist weiterhin eine im Grundkörper 10 angeordnete Druckmeßzelle 20 auf, die in diesem Ausführungsbeispiel als resistive Meßzelle, insbesondere als eine piezoresistive Meßzelle ausgestaltet ist. Die Meßzelle umfaßt einen membranartigen Verformungskörper, der von seiner ersten Oberfläche mit einem ersten Druck und von seiner zweiten Oberfläche mit einem zweiten Druck beaufschlagbar ist, wobei der erste bzw. der zweite Druck jeweils mittels einer Druckzuleitung 33, 34 von den Trennmemranen 31, 32 zu dem membranartigen Verformungskörper übertragen wird. Die Verformung des membranartigen Verformungskörpers ist von der Differenz zwischen dem ersten und dem zweiten Druck abhängig und wird mittels geeigneter Schaltungen in ein ein vorzugsweise elektrisches Signal umgewandelt. Einzelheiten hierzu sind dem Fachmann auf dem Gebiet der Sensorik geläufig und brauchen hier nicht näher erläutert werden.

Die beiden Trennmembranen 31, 32 sind bei diesem Ausführungsbeispiäf als Ringmembranen ausgebildet, die entlang ihres Innenrandes und Ihres Außenrandes an der jeweiligen Stirnseite des Grundkörpers 10 druckdicht befestigt sind. Die Befestigung erfolgt vorzugsweise durch Verschweißen.

Die Ringmembranen 31, 32 umschließen jeweils einen zentralen Bereich der Stirnseiten, wobei zwischen dem zentralen Bereich der ersten Stirnseite und der zweiten Stirnseite eine Überlastsicherung angeordnet ist.

Die Überlastsicherung umfaßt in diesem Aüsführungsbeispiel eine Kurzschlußleitung mit einem ersten und einem zweiten Abschnitt 47, 48 sowie eine Ventilanordnung, welche die Kurzschlußleitung in Abhängigkeit von den aktuellen Druckverhältnissen freigibt oder sperrt. Der erste Abschnitt der Kurzschlußleitung erstreckt sich zwischen einer Öffnung in der ersten Stirnfläche und einer Öffnung in der Wand einer Bohrung die sich zwischen den zentralen Bereichen der ersten und der zweiten Stirnfläche erstreckt.

Die Ventilanordnung umfaßt ein Kolbenventil 40, welches zwischen zwei Druckfedern 43, 44 in einer Bohrung im Grundkörper 10 axial eingespannt ist. Die beiden Druckfedern 43, 44 liegen an Druckkolben 41, 42 an, wobei die beiden Druckkolben 41, 42 jeweils durch einen Sicherungsring 45, 46 an der Stirnseite axial eingespannt sind.

Die Druckkolben schließen im wesentlichen druckdicht mit der Wandung der Bohrung ab, und sind in axialer Richtung beweglich, wobei sie hierzu die Druckfedern 43, 44 komprimieren müssen. Abhängig von der Vorspannung der Federn ist eine Kompression erst dann möglich, wenn die Kraft auf die Stirnfläche eines Druckkolbens bzw. der Druck, mit dem die Stirnfläche beaufschlagt wird, einen bestimmten Grenzwert übersteigt. Wenn der Meßdruck auf einer der Stirnseiten den Grenzwert überschreitet, beispielsweise auf der linken Seite des in Fig. 1 gezeichneten Differenzdrucksensors, dann wird der Druckkolben 41 in den Grundkörper gedrückt, wodurch sich die Gleichgewichtslage des Kolbenventils 40 zwischen den beiden Druckfedern 43, 44 verschiebt. Das Kolbenventil 40 umfaßt einen Durchlaß, der bei hinreichender Auslenkung des Kolbenventils eine Fließverbindung zwischen dem ersten Abschnitt 47 und dem zweiten Abschnitt 48 der Kurzschlußleitung herstellt. In dieser Situation kann das Meßmedium von der ersten Stirnseite des Grundkörpers duch die Kurzschlußleitung zur zweiten Seite des Grundkörpers fließen und so den Druck bzw. Druckunterschied zwischen dem ersten und dem zweiten Meßpunkt so weit abbauen, bis der Grenzwert unterschritten ist, und das Kolbenventil 40 aufgrund der Federkraft wieder seiner Ausgangsposition angenähert wird, so daß die Mantelfläche des Kolbenventils die beiden Öffnungen der Kurzschlußleitungsabschnitte zu der zentralen Bohrung sperrt.

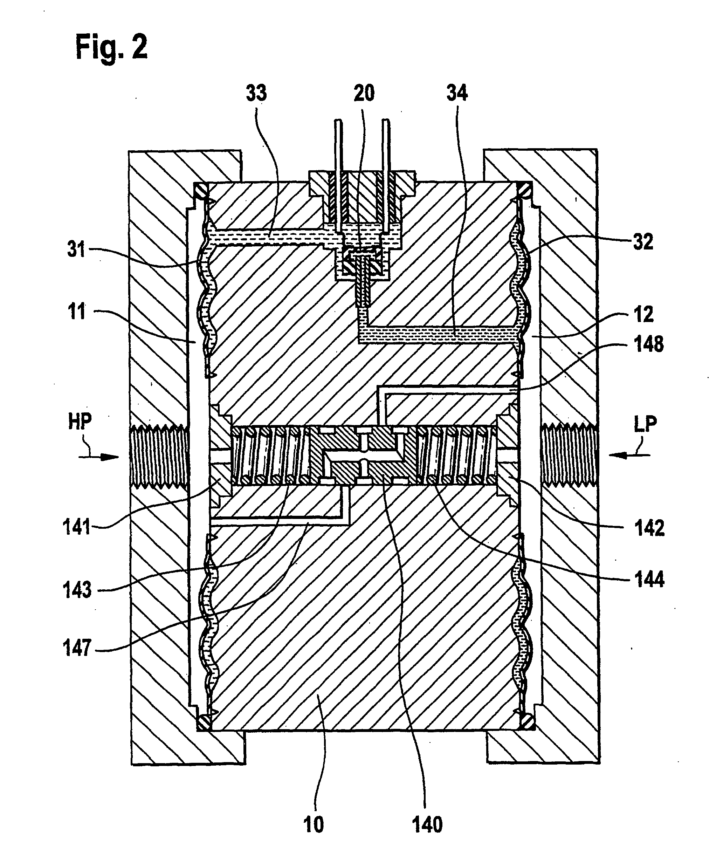

Fig. 2 zeigt eine modifizierte Ausführungsform, des erfindungsgemäßen Differenzdrucksensors. Die Gesamkonstruktion des Sensors ist abgesehen von einer veränderten Ventilanordnung im wesentlichen identisch. Die Ventilanordnung weist bei dieser Ausführungsform keine Druckkolben auf, und das Kolbenventil ist direkt mit dem ersten und dem zweiten Druck beaufschlagbar. D.h., die Auslenkung des Kolbenventils 140 ist jederzeit proportional zur Druckdifferenz zwischen dem ersten Druck und dem zweiten Druck. Diese Ausführungsform weist gegenüber der zuvor beschriebenen den Nachteil auf, daß die Ventilanordnung bereits innerhalb des Nennbereichs für den Differenzdruck ausgelenkt wird und somit ggf. die Meßgenauigkeit des Differenzdrucksensors beeinträchtigen kann. Der Vorteil dieser Anordnung ist der einfachere und kostengünstigere Aufbau der Ventilanordnung. Je nach Genauigkeitsanforderungen ist der einen oder der anderen Ausführungsform der Vorzug zu geben.

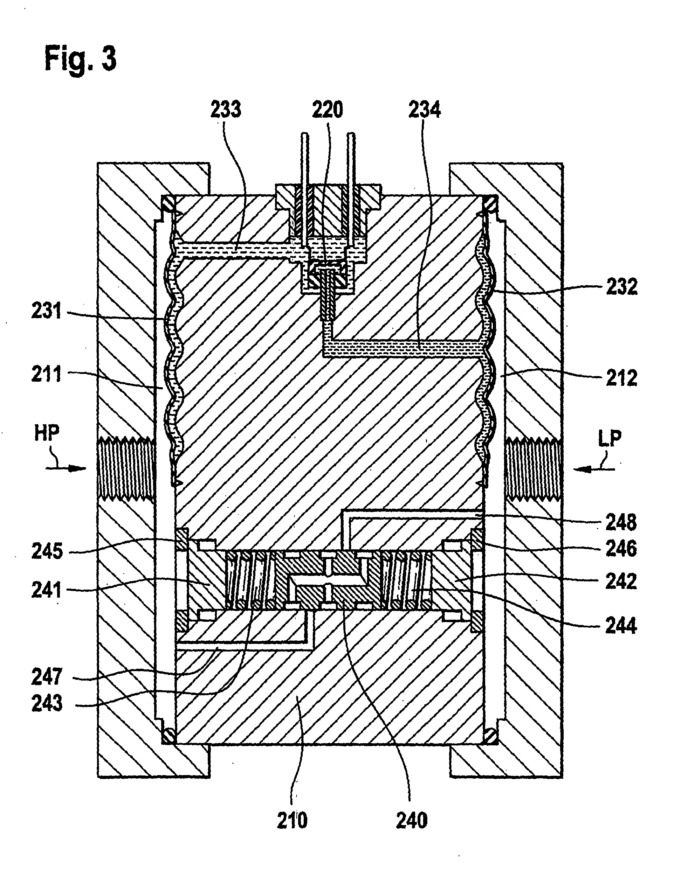

Fig. 3 zeigt einen Differenzdrucksensor mit einer Ventilanordnung des in Fig. 1 gezeigten Typs. D.h., ein Kolbenventil 240 ist zwischen zwei elastischen Federn 243, 244 axial eingespannt, die durch zwei Druckkolben 241, 242, elastisch vorgespannt sind. Infolgedessen erfolgt auch bei dieser Ausführungsform eine Auslenkung der Druckkolben und des Kolbenventils 240 erst dann, wenn der Druck bzw. der Differenzruck einen vorgegebenen Grenzwert übersteigt. Die Ausführungsform in Fig. 3 unterscheidet sich von den zuvor gezeigten Ausführungsformen dadurch, daß die Trennmembranen 331, 332 nicht als Ringmembranen, sondern als vollflächige Kreisscheiben oder Rechtecke ausgebildet sind. Dies hat den Vorteil, daß jede Trennmembran nur eine Verbindungsnaht, beispielsweise eine Schweißnaht, zum Grundkörper aufweist. Hierdurch wird einerseits der Fertigungsaufwand reduziert und andererseits wird eine rißgefährdete Verbindungsnaht eliminiert. Diese Ausführungsform ist insbesondere für solche Anwendungen geeignet, bei denen es auf einen kompakten und symmetrischen Aufbau des Sensors nicht ankommt.

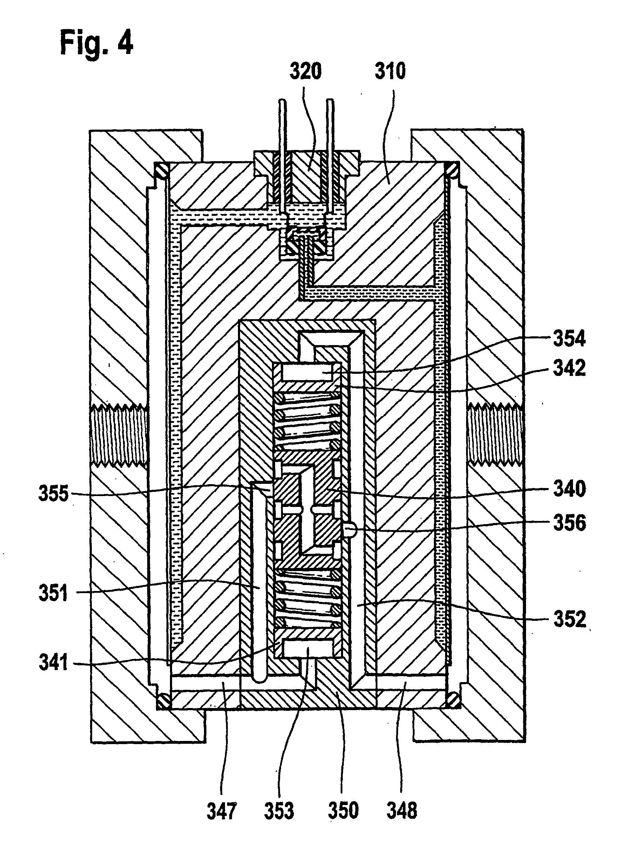

Fig. 4 zeigt eine weitere Modifikation des erfindungsgemäßen Differenzdrucksensors. Die Ventilanordnung ist hier in einer Bohrung im Grundkörper 310 angeordnet, die sich von einer Mantelfläche des Grundkörpers 310 parallel zu den Stirnflächen in das Innere des Grundkörpers 310 erstreckt.

Im Prinzip arbeitet die Ventilanordnung nach der zuvor beschriebenen Weise, d.h. bei Überschreitung eines Druckgrenzwerts wird ein Druckkolben 341, 342 und ein Kolbenventil 340 ausgelenkt. Bei hinreichend weiter Auslenkung überbrückt ein Durchlaß im Kolbenventil die beiden Abschnitte 351, 352 einer Kurzschlußleitung, wodurch eine Fließverbindung zwischen der ersten und der zweiten Stirnseite des Grundkörpers etabliert wird.

Die Abschnitte 351, 352 der Kurzschlußleitung weisen in dieser Ausführungsform jedoch Verzweigungen auf. Die erste Kurzschlußleitung 351 umfaßt einen ersten Steuerzweig 353, über den ein erster Druckkolben 341 der Ventilanordnung mit einem ersten Prozeßdruck beaufschlagt wird, und einen ersten Flußzweig 355, der sich bis zu einer ersten Öffnung in der Wandung einer Bohrung erstreckt, in der das Kolbenventil axial zwischen Druckfedern und Druckkolben 341, 342 axial eingespannt ist.

Die zweite Kurzschlußieitung 352 umfaßt einen ersten Steuerzweig 354, über den der zweite Druckkolben 344 der Ventilanordnung mit einem zweiten Prozeßdruck beaufschlagt wird, und einen zweiten Flußzweig 356, der sich bis zu einer zweiten Öffnung in der Wandung der Bohrung erstreckt, in der das Kolbenventil axial zwischen Druckfedern und den Druckkolben 341, 342 axial eingespannt ist.

Der ersten Kurzschlußleitung wird der erste Druck über einen ersten Kurzschlußkanal 347 zugeführt, der sich von einer Öffnung in der ersten Stimfläche des Grundkörpers 310 zur ersten Kurzschlußleitung erstreckt, und der zweiten Kurzschlußleitung wird der zweite Druck über einen zweiten Kurzschlußkanal 348 zugeführt, der sich von einer Öffnung in der zweiten Stirnfläche des Grundkörpers 310 zur zweiten Kurzschlußleitung 352 erstreckt.

Die Ventilanordnung einschließlich der Kurzschiußleitungen 351, 352 ist vorzugsweise in einem Ventileinsatz 350 angeordnet, der als komplettes Bauteil in der Bohrung im Grundkörper montierbar ist. Die Befestigung des Ventileinsatzes im Grundkörper kann beispielsweise durch Verschweißen, Verlöten, oder Verschrauben erfolgen. Im Fall des Einschraubens könnten die Anschlüsse zu den in diesem Fall axial zueinander versetzten Kurzschlußkanälen beispielsweise als ringförmige Nuten in der Mantelfläche des Ventileinsatzes ausgebildet sein, um hinreichende Winkeltoleranz für das Einschrauben zu erzielen. Vorzugsweise sollten der Ventileinsatz und der Grundkörper aus Materialien mit einem vergleichbaren Wärmeausdehnungsverhalten, d.h. insbesondere aus identischen Materialien gefertigt werden.

Die Öffnungen des ersten und des zweiten Kurzschlußkanals 351, 352 sind vorzugsweise jeweils im Randbereich der Stirnseiten des Grundkörpers 310 angeordnet. Vorzugsweise sind die Trenntnembranen dieser Ausführungsform vollflächige Kreismembranen oder Rechteckmembranen. Der Vorteil der beschriebene Anordnung besteht unter anderem darin, daß der Flächenbedarf für die Ventilanordnung auf den Stirnseiten des Grundkörpers 310 gegenüber der zuvor beschriebenen Ausführungsform erheblich reduziert ist, da nur noch die verhältnismäßig kleinen Eintrittsöffnungen für die Kurzchlußkanäle 347, 348 zum Flächenbedarf der Ventilanordnung beitragen. Wahlweise können zur Erhöhung des Masseflusses, bzw. zur Verkürzung der Reaktionszeit der Ventilanordnung mehrere Kurzschlußkanäle um den Umfang der Stirnflächen angeordnet werden, die entweder alle in einem zentralen Punkt oder an verschiedenen Punkten ihrer jeweiligen Kurzschlußleitung zugeführt werden.

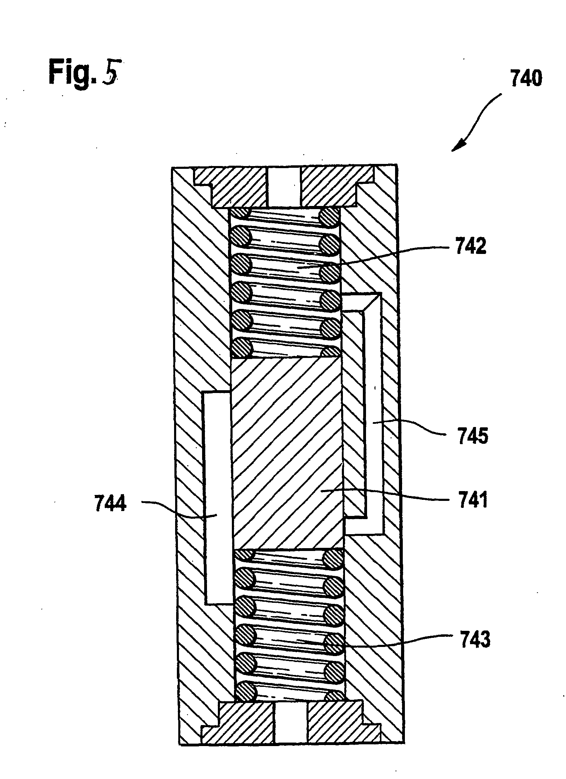

Die Fig.5 zeigt eine Ventilanordnung mit integrierten Kurzschlussleitungen, die vorzugsweise als kompletter Ventileinsatz zu montieren ist. Sie ist grundsätzlich in Kombination mit beliebigen Differenzdrucksensoren verwendbar und insbesondere mit den zuvor beschriebenen Ausführungsformen kombinierbar, indem die dort beschriebenen Ventilanordnungen und Kurzschlußleitungen ersetzt werden.

Fig.5 zeigt einen Ventileinsatz mit einem Kolbenventil 741, welches zwischen zwei Federn 742, 743 elastisch eingespannt ist. Der Ventileinsatz verfügt für jede Durchlaßrichtung über eine Kurzschlußleitung 744, 745, deren Eintrittsöffnung unterhalb eines bestimmten Grenzwerts verschlossen ist, und die bei hinreichender Auslenkung des Kolbenventils 741 in die entsprechende Richtung freigegeben werden, so daß die Kurzschlußleitung den Kolben überbrückt und ein Druckausgleich erfolgen kann.

In der Fig. 5 ist die linke Kurzschlußleitung 744 als Schlitz bzw. als Rinne dargestellt. Sie gibt den Durchfluß für das Meßmedium von oben nach unten frei, wenn das Kolbenventil bei einer binreichend großen Druckdifferenz nach unten ausgelenkt wird. Die in der Fig. 5 rechts gezeigte Kurzschlußleitung 745, die röhrenförmig ausgebildet ist, arbeitet entsprechend in umgekehrter Richtung. Die beiden Kurzschlußleitungen sind hier nur zu Illustrationszwecken unterschiedlich dargestellt. In der Praxis kann es vorzuziehen sein, entweder beide Kurzschlußleitungen als Schlitze oder beide Kurzschlußleitungen röhrenförmig zu gestalten.

Die eben beschriebene Ausführungsform zeichnet sich insbesondere durch einen sehr einfachen Aufbau aus, der insbesondere mit der Differenzdrucksensoranordnung aus Fig. 4 kombiniert werden kann.

Für alle Ausführungsformen gilt, daß der Strömungswiderstand der Kurzschlußleitungen durch Variation ihres Querschnitts kontrolliert werden kann. Gleichermaßen kann das Verhalten der Druckkolben durch die Größe ihrer Stirnfläche im Verhältnis zu der Vorspannung der Federn und deren Elastizitätskonstante kontrolliert werden. Weiterhin können Federelemente mit degressiven Kennlinien eingesetzt werden, die bei Überschreitung eines Druckgrenzwertes die weitgehende Öffnung einer Kurzschlußleitung zulassen. Durch Abstimmung dieser Parameter können die gewünschten Reaktionseigenschaften der Überlastsicherung auf Druckspitzen eingestellt werden.

Für bestimmte Einsatzgebiete ist es wünschenswert, wenn die Rückstellbewegung des Ventils nach einem Überdruckabbau gedämpft erfolgt, um Oszillationen der Ventilanordnung zu vermeiden. Hierzu kann eine entsprechend gewählte Reibungskraft zwischen den Druckkolben bzw. dem Kolbenventil und der Bohrung im Grundkörper dienen. Weiterhin kann die Ventilanordnung zur Verhinderung von Oszillationen so gestaltet sein, daß bei der Rückstellung des Ventils die Sperrung des Durchfluß zunächst asymptotisch angenähert wird, und nicht in einer Sprungfunktion erfolgt.

Hierzu sind beispielsweise schlitzförmigen Durchlässe geeignet, wie sie in Fig. 5 gezeigt sind, wobei die Querschnittsfläche eines Durchlaß senkrecht zur Flußrichtung in seinem hochdruckseitigen Einlaßabschnitt wesentlich kleiner ist als in seinem niederdruckseitigen Auslaßabschnitt und vom Ende des Einlaßabschnitt zum Auslaßabschnitt hin stetig ansteigt. Der jeweils wirksame Querschnitt des Durchlaß hängt dann davon ab, wie weit der Druckkolben ausgelenkt worden ist. Auf diese Weise kann beim Abbau von Überdruckstößen ein Gleichgewicht eingestellt werden, denn sobald bei der Rückstellung des Kolbens der effektive Durchmesser des Durchlaß so weit reduziert wird, daß es wieder zu einem leichten Druckanstieg kommt, wird das vorzeitige Schließen der Ventilanordnung durch eine rechtzeitige Gegenbewegung verhindert.

Selbstverständlich kann eine schlitzförmige Passage auch in der Mantelfläche eines Kolbenventils oder eines Druckkolbens integriert werden, so daß die Passage je nach Auslenkungsgrad eine Fließverbindung zwischen zwei Leitungsabschnitten herstellt.

Wenngleich die Erfindung zuvor im Zusammenhang mit Differenzdrucksensoren beschrieben wurde, die einen Trennkörper bzw. eine Ölvorlage aufweisen, so umfaßt die Erfindung auch Differenzdrucksensoren ohne einen Trennkörper oder eine Ölvorlagen, soweit sie eine Überlastsicherung aufweisen.
¹ Verb omitted in source text.
² Omitted in source text.

## Patentansprüche

1. Differenzdrucksensor zum Messen der Differenz zwischen einem ersten Druck an einem ersten Meßpunkt und einem zweiten Druck an einem zweiten Meßpunkt, umfassend:
einen Grundkörper (10; 210; 310);
zwei an dem Grundkörper angeordnete membranartige Verformungskörper (31,32;231,232) von denen der erste mit dem ersten Druck und der zweite mit dem zweiten Druck beaufschlagbar ist;
ein Wandlerelement (20; 220; 320) zur Erzeugung eines Meßsignals in Abhängigeit der Verformung der membranartigen Verformungskörper, und wobei der Differenzdrucksensor weiter eine Überlastsicherung aufweist, die eine Fließverbindung zwischen dem ersten Meßpunkt und dem zweiten Meßpunkt herstellt, wenn der erste Druck oder die Differenz zwischen dem ersten Druck und dem zweiten Druck einen Grenzwert übersteigt, wobei die Überlastsicherung mindestens eine Kurzschlußleitung (47,48;147,148;247,248; 347, 348, 355, 356; 744, 745) welche die Fließverbindung zwischen dem ersten Meßpunkt und dem zweiten Meßpunkt herstellt; und eine Ventilanordnung (40; 140; 240; 340; 740), welche mindestens durch den ersten Druck steuerbar ist, wobei die Ventilanordnung die mindestens eine Kutzschlußleitung sperrt wenn der erste Druck oder die Differenz zwischen dem ersten Druck und dem zweiten Druck unterhalb des Grenzwerts liegt, und diese dann freigibt, wenn der erste Druck oder die Differenz zwischen dem ersten Druck und dem zweiten Druck einen Grenzwert übersteigt; **dadurch gekennzeichnet, daß**
die Ventilanordnung ein Kolbenventil als Steuerglied aufweist, welches in in einer Bohrung im Grundkörper zwischen zwei Druckfedern axial und elastisch eingespannt ist und in seinem Gleichgewichtszustand die mindestens eine Kurzschlußleitung sperrt.

2. Differenzdrucksensor nach Anspruch 1, wobei die Ventilanordnung (40; 140; 240; 340; 740) auch durch den zweiten Druck steuerbar ist und die mindestens Kurzschlußleitung (47, 48; 147, 148; 247, 248; 347; 348, 355, 358 ; 744, 745) auch dann freigibt, wenn der zweite Druck oder die Differenz zwischen dem zweiten Druck und dem ersten Druck einen Grenzwert übersteigt.

3. Differenzdrucksensor nach Anspruch 1 oder 2, wobei der Grundkörper einen ersten Oberflächenabschnitt aufweist in dem der erste Verformungskörper angeordnet ist, und einen zweiten Oberflächenabschnitt in dem der zweite Verformungskörper angeordnet ist, wobei sich die mindestens eine Kurzschlußleitung (47, 48; 147, 148; 247, 248; 347, 348, 355, 356; 744, 745) zwischen dem ersten Oberflächenabschnitt und dem zweiten Oberflächenabschnitt erstreckt.

4. Differenzdrucksensor nach einem der Ansprüche 1 bis 3, wobei zumindest eine erste der Druckfedern zwischen dem Kolbenventil (40; 10; 240; 340) und einem ersten Druckkolben (41, 42; 241, 242; 341, 342) eingespannt ist, der mit dem ersten Druck beaufschlagbar ist.

5. Differenzdrucksensor nach Anspruch 4, wobei auch die zweite der Druckfedern zwischen dem Kolbenventil und einem zweiten Druckkolben axial eingespannt ist, der mit dem zweiten Druck beaufschlagbar ist.

6. Differenzdrucksensor nach Anspruch 1 bis 3, wobei das Kolbenventil (140; 741) zumindest mit dem ersten Meßdruck unmittelbar beaufschlagbar ist.

7. Differenzdrucksensor nach einem der Ansprüche 1 bis 6, wobei die mindestens eine Kurzschlußleitung (47, 48; 147, 148; 247, 248; 347, 348) einen ersten Abschnitt zwischen dem ersten Oberflächenabschnitt und einer ersten Anschlußöffnung in der Wand der Bohrung sowie einen zweiten Abschnitt zwischen dem zweiten Oberflächenabschnitt und einer zweiten Anschlußöffnung in der Wand der Bohrung umfaßt, die von der ersten Anschlußöffnung beabstandet ist, wobei ferner das Kolbenventil (40; 140; 240; 340) einen Kanal umfaßt, der geeignet ist, eine Fließverbindung zwischen der ersten und der zweiten Anschlußöffnung herzustellen, wenn das Kolbenventil (40; 140; 240; 340) ausgelenkt wird, welches in seiner Gleichgewichtslage die erste und die zweite Anschlurßöffnung verschließt.

8. Differenzdrucksensoren nach einem der vorhergehenden Ansprüche, weiterhin umfassend eine Trennkörperanordnung zur hydraulischen Übertragung des ersten Drucks und des zweiten Drucks zum Wandlerelement mit einer ersten Druckleitung und einer zweiten Druckleitung, die sich jeweils zwischen dem Wandlerelement und einem in dem in dem ersten bzw. zweiten Öberflächenabschnitt angeordneten ersten und zweiten Membranbett erstrecken, welche jeweils mittels des ersten bzw. des zweiten membranartigen Verformungskörpers gegen die entsprechenden Meßpunkte abgedichtet sind.

9. Differenzdrucksensor nach einem der vorhergehenden Ansprüche, wobei die Kurzschlußleitung und die Ventilanordnung in einem modularen Bauteil integriert sind.

## Claims

1. A differential pressure sensor for measuring the difference between a first pressure at a first measuring point and a second pressure at a second measuring point, comprising:
a base body (10; 210; 310);
two diaphragm-like deforming bodies (31, 32; 231, 232) arranged on the base body, of which the first may be acted upon with the first pressure and the second with the second pressure;
a transducer element (20; 220; 320) for generating a measuring signal in dependence on the deformation of the diaphragm-like deforming bodies; and
wherein the differential pressure sensor further has an overload protection which establishes a flow connection between the first measuring point and the second measuring point if the first pressure or the difference between the first pressure and the second pressure exceeds a limit value, wherein the overload protection [comprises]¹ at least one short-circuit line (47, 48; 147, 148; 247, 248; 347, 348, 355, 356; 744, 745) which establishes the flow connection between the first measuring point and the second measuring point; and
a valve arrangement (40; 140; 240; 340; 740) which is controllable at least by means of the first pressure, wherein the valve arrangement blocks the at least one short-circuit line when the first pressure or the difference between the first pressure and the second pressure lies below the limit value, and clears it again when the first pressure or the difference between the first pressure and the second pressure exceeds a limit value, **characterised in that** the valve arrangement has a piston valve as the control element, which is axially and resiliently clamped in a bore in the base body between two compression springs and in its state of equilibrium blocks the at least one short-circuit line.

2. A differential pressure sensor according to Claim 1, wherein the valve arrangement (40; 140; 240; 340; 740) is also controllable by means of the second pressure and also clears the at least [one]² short-circuit line (47, 48; 147, 148; 247, 248; 347, 348, 355, 356; 744, 745) when the second pressure or the difference between the second pressure and the first pressure exceeds a limit value.

3. A differential pressure sensor according to Claim 1 or 2, wherein the base body has a first surface portion in which the first deforming body is arranged, and a second surface portion in which the second deforming body is arranged, wherein the at least one short-circuit line (47, 48; 147, 148; 247, 248; 347, 348, 355, 356; 744, 745) extends between the first surface portion and the second surface portion.

4. A differential pressure sensor according to one of Claims 1 to 3, wherein at least a first one of the compression springs is clamped between the piston valve (40; 10 [sic, recte 140]; 240; 340) and a first pressure piston (41, 42; 241, 242; 341, 342), which may be acted upon with the first pressure.

5. A differential pressure sensor according to Claim 4, wherein the second one of the compression springs is also clamped axially between the piston valve and a second pressure piston, which may be acted upon with the second pressure.

6. A differential pressure sensor according to Claim 1 to 3, wherein the piston valve ( 140; 741) may be directly acted upon at least with the first measuring pressure.

7. A differential pressure sensor according to one of Claims 1 to 6, wherein the at least one short-circuit line (47, 48; 147, 148; 247, 248; 347, 348) comprises a first portion between the first surface portion and a first connection opening in the wall of the bore and a second portion between the second surface portion and a second connection opening in the wall of the bore, which is situated at a distance from the first connection opening, wherein, furthermore, the piston valve (40; 140; 240; 340) comprises a duct which is adapted for establishing a flow connection between the first and the second connection opening when the piston valve (40; 140; 240; 340) is displaced, the said piston valve in its equilibrium position closing the first and the second connection opening.

8. Differential pressure sensors according to one of the preceding claims, further comprising a separating body arrangement for the hydraulic transfer of the first pressure and the second pressure to the transducer element with a first pressure line and a second pressure line which each extend between the transducer element and a first and second diaphragm bed arranged in the first or second surface portion, each of which is sealed from the corresponding measuring points by means of the first or the second diaphragm-like deforming body.

9. A differential pressure sensor according to one of the preceding claims, wherein the short-circuit line and the valve arrangement are incorporated in a modular component.

## Revendications

1. Capteur de pression différentielle pour la mesure de la différence entre une première pression à un premier point de mesure et une deuxième pression à un deuxième point de mesure, comprenant :
un corps de base (10 ;210 ;310)
deux corps de déformation (31, 32, 231, 232) en forme de membrane , disposés sur le corps de base ; la première pression étant appliquée sur le premier corps et la deuxième pression étant appliquée sur le deuxième corps ;
un élément de convertisseur (20, 220, 320) pour la production d'un signal de mesure en liaison avec la déformation du corps de déformation en forme de membrane ; et où le capteur de pression différentielle présente en outre, une sécurité de surcharge qui créée une liaison de flux entre le premier point de mesure et le deuxième point de mesure lorsque la première pression ou la différence entre la première pression et la deuxième pression dépasse une valeur limitative ; la sécurité de surcharge créant au moins une conduite de court-circuit (47, 48, 147, 148, 247, 248, 347, 348, 355, 356, 744, 745) qui crée la liaison de circulation entre le premier point de mesure et le deuxième point de mesure ; et un dispositif à soupape (40, 140, 240, 340, 740) qui est susceptible d'être commandé par la première pression ; le dispositif à soupape fermant au moins une conduite de court-circuit lorsque la première pression ou la différence entre la première pression et la deuxième pression se trouve en dessous de la valeur limitative et libère ladite conduite lorsque la première pression ou la différence entre la première pression et la deuxième pression dépasse une valeur limitative ; **caractérisé en ce que**
le dispositif à soupape présente une soupape à piston en tant que membre de commande, laquelle soupape à piston est serrée de façon axiale et élastique dans un alésage dans le corps de base, entre deux ressorts de pression et ferme dans sa position d'équilibre au moins la conduite de court-circuit.

2. Capteur de pression différentielle selon la revendication 1, où le dispositif à soupape (40, 140, 240, 340, 740) est susceptible d'être commandé également par la deuxième pression et libère au moins une conduite de court-circuit (47, 48, 147, 248, 347, 348, 355, 358, 744, 745) lorsque la deuxième pression ou la différence entre la deuxième pression et la première pression dépasse une valeur limitative.

3. Capteur de pression différentielle selon la revendication 1 ou 2, où le corps de base présente une première section de surface supérieure dans laquelle est disposé le premier corps de déformation, et une deuxième section de surface supérieure dans laquelle est disposé le deuxième corps de déformation ; au moins une conduite de court-circuit (47, 48, 147, 148, 247, 347, 348, 355, 356, 744, 745) s'étendant entre la première section de surface supérieure et la deuxième section de surface supérieure.

4. Capteur de pression différentielle selon les revendications 1 à 3, où au moins un premier ressort parmi les ressorts de pression est serré entre la soupape à piston (40, 10, 240, 340) et un premier piston à pression (41, 42, 241, 242, 341, 342) auquel est appliqué la première pression.

5. Capteur de pression différentielle selon la revendication 4, où le deuxième ressort de pression aussi est serré de façon axiale entre la soupape à piston et un deuxième piston à pression, auquel on applique la deuxième pression.

6. Capteur de pression différentielle selon les revendications 1 à 3, où on applique directement sur la soupape à piston (140, 741) au moins la première pression de mesure.

7. Capteur de mesure différentielle selon une des revendications 1 à 6, où la conduite de court-circuit (47, 48, 147, 148, 247, 248, 347, 348) comprend une première section entre la première section de surface supérieure et un premier orifice de connexion dans la paroi de l'alésage ainsi qu'une deuxième section entre la deuxième section de surface supérieure et un deuxième orifice de connexion dans la paroi de l'alésage, espacée du premier orifice de connexion ; la soupape à piston (40, 140, 240, 340) comprenant en outre, un canal qui est approprié pour créer une liaison de circulation entre le premier et le deuxième orifice de connexion lorsque la soupape à piston (40, 140, 240, 340) est déviée , laquelle sa position d'équilibre ferme le premier et le deuxième orifice de connexion.

8. Capteurs de pression différentielle selon une des revendications précédentes, comprenant en outre, un dispositif de séparation de corps pour la transmission hydraulique de la première pression et de la deuxième pression vers l'élément convertisseur avec une première conduite de pression et une deuxième conduite de pression qui s'étend à chaque fois entre l'élément convertisseur et un premier et deuxième support de membrane disposé dans la première, respectivement, la deuxième section de surface supérieure, lequel support de membrane est rendu étanche à chaque fois, au moyen du premier, respectivement du deuxième corps de déformation en forme de membrane contre les points de mesure correspondants.

9. Capteur de pression différentielle selon une des revendications précédentes, où la conduite de court-circuit et le dispositif à soupape sont intégrés dans un élément de construction modulaire.
